# EUROPÄISCHE PATENTANMELDUNG

(11) **EP 2 045 642 A1**
(43) Veröffentlichungstag der Anmeldung: **08.04.2009**
(21) Anmeldenummer: 08163494.1
(22) Anmeldetag: 09.06.2001
(51) Int. Cl.: G02B 21/00, G02B 6/12, G02F 1/35

(54) **Scanmikroskop**

(30) Priorität: 17.06.2000 DE 10030013; 29.03.2001 DE 10115590
(62) Teilanmeldung aus: 01114105.8
(71) Anmelder: Leica Microsystems CMS GmbH, 35578 Wetzlar (DE)
(72) Erfinder: Birk, Holger, 74909 Meckesheim (DE); Storz, Rafael, 8330 Pfäffikon (CH); Engelhardt, Johann, 76669 Bad Schönborn (DE); Möllmann, Kyra, 67705 Trippstadt (DE)
(74) Vertreter: Schaumburg, Thoenes, Thurn, Landskron, Eckert

(57) **Zusammenfassung**

Die Erfindung betrifft ein Scanmikroskop (1) mit einem Laser (2), der einen Lichtstrahl einer ersten Wellenlänge (5) emittiert, der auf ein optisches Element (9) gerichtet ist, das breitbandiges Licht erzeugt. Es sind Maßnahmen zur Unterdrückung (16) des Lichtes der ersten Wellenlänge vorgesehen, die ein Mittel zur räumlich spektralen Aufspaltung (60) und mindestens eine Blende (63, 65) umfassen.

## Beschreibung

Die Erfindung betrifft ein Scanmikroskop mit einem Laser, der einen Lichtstrahl einer ersten Wellenlänge emittiert, der auf ein optisches Element gerichtet ist, das die Wellenlänge des Lichtstrahles zumindest zum Teil verändert.

In der Scanmikroskopie wird eine Probe mit einem Lichtstrahl abgerastert. Hierzu werden oft Laser als Lichtquelle eingesetzt. Aus der EP 0 495 930: "Konfokales Mikroskopsystem für Mehrfarbenfluoreszenz" ist beispielsweise eine Anordnung mit einem einzelnen mehrere Laserlinien emittierenden Laser bekannt. Derzeit werden hierfür meist Mischgaslaser, insbesondere ArKr-Laser, eingesetzt.

Als Probe werden beispielsweise mit Fluoreszenzfarbstoffen präparierte, biologische Gewebe oder Schnitte untersucht. Im Bereich der Materialuntersuchung wird oft das von der Probe reflektierte Beleuchtungslicht detektiert.

Auch Festkörperlaser und Farbstofflaser, sowie Faserlaser und Optisch-Parametrische-Oszillatoren (OPO), denen ein Pumplaser vorgeordnet ist, werden verwendet.

Aus der Offenlegungsschrift DE 198 53 669 A1 ist eine Ultrakurzpulsquelle mit steuerbarer Mehrfachwellenlängenausgabe offenbart, die insbesondere in einem Multiphotonenmikroskop Anwendung findet. Das System weist einen Ultrakurzimpulslaser zur Erzeugung ultrakurzer optischer Impulse einer festen Wellenlänge und zumindest einen Wellenlängenumwandlungskanal auf.

Aus der Patentschrift US 6,097,870 ist eine Anordnung zur Generierung eines Breitbandspektrums im sichtbaren Spektralbereich bekannt. Die Anordnung basiert auf einer mikrostrukturierten Faser, in die das Licht eines Pumplasers eingekoppelt wird. Die Wellenlänge des Pumplichtes wird in der mikrostrukturierten Faser derart verändert, dass das resultierende Spektrum sowohl Wellenlängen oberhalb-, als auch Wellenlängen unterhalb der Wellenlänge des Pumplichtes aufweist.

Als mikrostrukturiertes Material findet auch sog. Photonic-band-gap-Material oder "photon crystal fibres", "holey fibers" oder "microstructured fibers" Verwendung. Es sind auch Ausgestaltungen als sog. "Hollow fiber" bekannt.

Festkörperlaser, wie beispielsweise die häufig in der Scanmikroskopie eingesetzten Ti:Saphir-Laser, weisen meist einen gefalteten Resonator in x- oder z- Geometrie auf, der aus zwei Endspiegeln und zwei Faltspiegeln gebildet ist. Das Licht eines Pumplasers wird hierbei durch einen der Faltspiegel, die für Licht der Wellenlänge des Pumplichtes transparent sind, longitudinal in der Resonator eingekoppelt. Dieses konvertiert im optisch aktiven Medium (im Beispiel Ti:Saphir) zu einer anderen Wellenlänge und verlässt den Resonator als Ausgangslicht durch einen der Endspiegel, der für das Ausgangslicht teildurchlässig ausgebildet ist. Da die Resonatorspiegel für die Wellenlänge des Pumplichtes nicht vollständig transparent sind, enthält das Ausgangslicht zu kleinen Bruchteilen noch Licht der Wellenlänge des Pumplichtes. Dies ist ganz besonders in der Mehrfarbfluoreszenzmikroskopie störend, da die Probe nicht ausschließlich mit Licht der gewünschten Wellenlänge, sondern auch mit Licht der Wellenlänge des Pumplichtes beleuchtet und angeregt wird. Dies verursacht unerwünschtes Fluoreszenzleuchten, Artefakte und führt letztlich, da auch Anteile des Pumplichtes durch Reflexion und Streuung zum Detektor gelangen, zu falschen Untersuchungsergebnissen.

Alle genannten Anordnungen zur Wellenlängenveränderung weisen diesen Nachteil auf.

Der Erfindung liegt die Aufgabe zugrunde ein Scanmikroskop zu schaffen, das die aufgezeigten Probleme löst.

Die objektive Aufgabe wird durch eine Anordnung gelöst, die die Merkmale des kennzeichnenden Teils des Patentanspruchs 1 beinhaltet.

Die Erfindung hat den Vorteil, dass die unerwünschte Beleuchtung der Probe mit Licht der ersten Wellenlänge vermieden ist.

In einer einfachen Ausgestaltung ist zur Unterdrückung des Lichtes der ersten Wellenlänge ein Filter vorgesehen. Dieser ist vorzugsweise als dielektrischer Kantenfilter oder als Farbglasfilter ausgebildet. Insbesondere bei der Verwendung von mikrostrukturiertem Material, wie Photonic-Band-Gap-Material, zur Veränderung der Wellenlänge in der Art, dass ein breites Spektrum entsteht, ist es von Vorteil, den Filter, beispielsweise durch entsprechende Beschichtung, derart auszugestalten, dass die erste Wellenlänge nicht vollständig unterdrückt wird, sondern innerhalb des in der Wellenlänge veränderten Lichtstrahles dieselbe Leistung aufweist, wie die übrigen Komponenten gleicher spektraler Breite.

Das Mittel zur Unterdrückung des Lichtes der ersten Wellenlänge beinhaltet in einer anderen Ausgestaltungsform ein Prisma oder ein Gitter zum räumlich spektralen Auffächern, dem eine Blendenanordnung nachgeschaltet ist, die nur Licht der gewünschten Beleuchtungswellenlänge passieren lässt und Licht, das die erste Wellenlänge aufweist, blockiert.

Das Mittel zur Unterdrückung ist an beliebigen Stellen innerhalb des Strahlenganges des Scanmikroskops anbringbar. Es ist von besonderem Vorteil, die Mittel zur Unterdrückung direkt hinter dem optischen Element anzuordnen, um eine Aufstreuung und Reflexion der Anteile des Lichtes der ersten Wellenlänge an anderen optischen Bauteilen zu vermeiden, da diese hierdurch zum Detektor gelangen können,

Das optische Element ist in einer bevorzugten Ausgestaltung des Scanmikroskops aus einer Vielzahl von mikrooptischen Strukturelementen aufgebaut, die zumindest zwei unterschiedliche optische Dichten aufweisen.

Ganz besonders bevorzugt ist eine Ausgestaltung, bei der das optische Element einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der erste Bereich den zweiten Bereich umschließt. Die mikrooptischen Strukturelemente sind vorzugsweise Kanülen, Stege, Waben, Röhren oder Hohlräume.

Das optische Element besteht in einer anderen Ausgestaltung aus nebeneinander angeordnetem Glas- oder Kunststoffmaterial und Hohlräumen und ist als Lichtleitfaser ausgestaltet.

Eine ganz besonders bevorzugte und einfach zu realisierende Ausführungsvariante beinhaltet als optisches Element eine herkömmliche Lichtleitfaser mit einem Faserkern, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der Faser beträgt in einer bevorzugten Ausgestaltung 150 µm außerhalb des Bereich der Verjüngung und der des Faserkerns in diesem Bereich ca. 8 µm. Im Bereich der Verjüngung ist der Durchmesser der Faser auf ca. 2 µm reduziert. Der Faserkerndurchmesser liegt entsprechend im Nanometerbereich.

Das optische Element ist in einer anderen Ausführungsform ein weiterer Laser. Dieser kann als Festkörper-, Gas oder Farbstofflaser oder als Optisch-Parametrischer-Oszillator (OPO) ausgeführt sein.

In einer besonderen Ausführungsvariante beinhaltet das optische Element einen Kristall zur Frequenzvervielfachung, wie zum Beispiel KDP-Kristalle oder LBO-Kristalle.

Eine weitere Ausgestaltungsform beinhaltet ein weiteres optische Element, das dem optischen Element nachgeordnet ist und das die Wellenlänge des in der Wellenlänge veränderten Lichtstrahles erneut verändert. Bei dieser Ausführungsform ist es von besonderem Vorteil, sowohl das Lichtes der ersten Wellenlänge, als auch das primär in der Wellenlänge veränderte Licht zu unterdrücken. Im Konkreten beinhaltet eine solche Ausgestaltungsform beispielsweise eine Hintereinanderanordnung von einem Argon-lonen-Laser, einem Farbstofflaser und einem Kristall zur Frequenzverdopplung. Ganz besonders Vorteilhaft ist eine Hintereinanderschaltung von einem ArgonIonenlaser, einem Ti:Saphir-Laser und einer als Lichtleitfaser ausgestalteten mikrooptischen Struktur aus Photonic-Band-Gap-Material.

Das Scanmikroskop kann als Konfokalmikroskop ausgestaltet sein.

In der Zeichnung ist der Erfindungsgegenstand schematisch dargestellt und wird anhand der Figuren nachfolgend beschrieben. Dabei zeigen:
- Fig. 1: eine erfindungsgemäßes konfokales Scanmikroskop,
- Fig. 2: einen Teil des Beleuchtungsstrahlenganges eines Scanmikroskops,
- Fig.3: einen Teil des Beleuchtungsstrahlenganges eines anderen Scanmikroskops und
- Fig.4: einen Teil des Beleuchtungsstrahlenganges eines weiteren Scanmikroskops
- Fig. 5: eine Ausführungsform der Lichtleitfaser aus Photonic-Band-Gap-Material

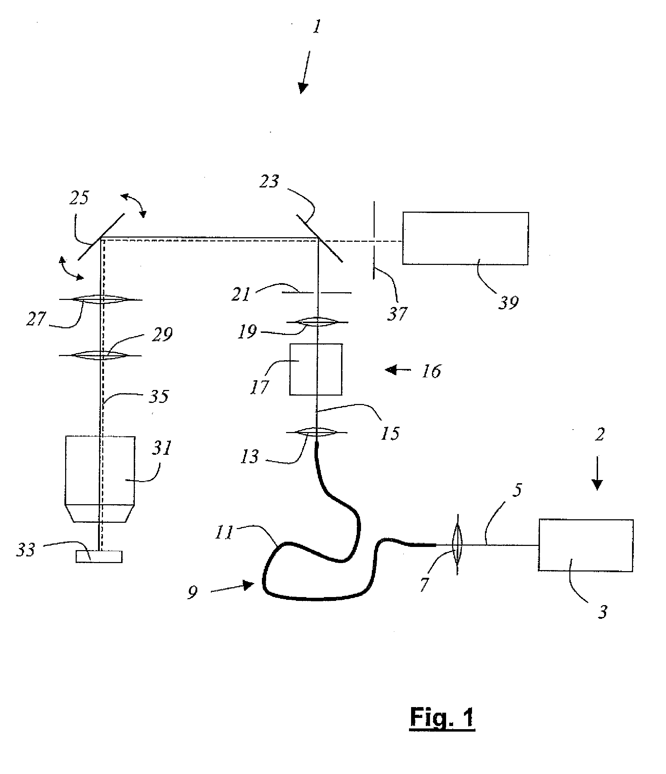

Fig. 1 zeigt ein konfokales Scanmikroskop 1, das einen Laser 2 zur Erzeugung eines Lichtstrahles 5 einer ersten Wellenlänge von 800 nm beinhaltet. Der Laser ist als modengekoppelter Titatn-Saphir-Laser 3 ausgeführt. Der Lichtstrahl 5 wird mit einer Einkoppeloptik 7 in das Ende eines optischen Elements 9 zur Wellenlängenveränderung fokussiert, das als Lichtleitfaser aus Photonic-Band-Gap-Material 11 ausgebildet ist. Zum Kollimieren des aus der Lichtleitfaser aus Photonic-Band-Gap-Material 11 austretenden, in der Wellenlänge veränderten Lichtstrahles 15, ist eine Auskoppeloptik 13 vorgesehen. Das Spektrum des in der Wellenlänge veränderten Lichtstrahles ist über den Wellenlängenbereich von 300 nm bis 1600 nm nahezu kontinuierlich, wobei die Lichtleistung über das gesamte Spektrum weitgehend konstant ist; lediglich im Bereich der ersten Wellenlänge von 800 nm ist eine drastische Leistungsüberhöhung zu verzeichnen. Der in der Wellenlänge veränderte Lichtstrahl 15 durchläuft als Mittel zur Unterdrückung 16 einen dielektrischen Filter 17, der in dem in der Wellenlänge veränderten Lichtstrahl 15 die Leistung des Lichtanteiles im Bereich der ersten Wellenlänge auf das Niveau der übrigen Wellenlängen des in der Wellenlänge veränderten Lichtstrahles reduziert. Anschließend wird der in der Wellenlänge veränderte Lichtstrahl mit der Optik 19 auf eine Beleuchtungsblende 21 fokussiert und gelangt über den Hauptstrahlteiler 23 zum Scanspiegel 25, der den in der Wellenlänge veränderten Lichtstrahl 15 durch die Scanoptik 27, die Tubusoptik 29 und das Objektiv 31 hindurch über die Probe 33 führt. Das von der Probe 33 ausgehende Detektionslicht 35, das in der Zeichnung gestrichelt dargestellt ist, gelangt durch das Objektiv 31, die Tubusoptik 29 und die Scanoptik 27 hindurch zurück zum Scanspiegel 25 und dann zum Hauptstrahlteiler 23, passiert diesen und wird nach Durchlaufen der Detektionsblende 37 mit dem Detektor 39, der als Photomultiplier ausgeführt ist, detektiert.

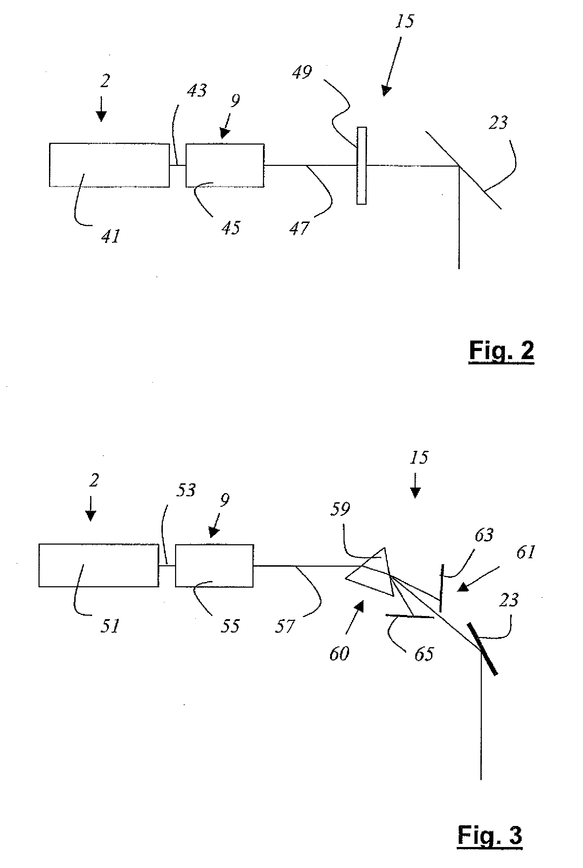

Fig. 2 zeigt den Teil des Beleuchtungsstrahlenganges eines Scanmikroskops bis zum Hauptstrahlteiler 23. In diesem Ausführungsbeispiel erzeugt ein Laser 2, der als Argon-lonen-Laser 41 ausgestaltet ist, einen Lichtstrahl 43 einer ersten Wellenlänge von 514 nm, der auf einen Titan-Saphir-Laser 45, der als optisches Element 9 zur Wellenlängenveränderung dient, gerichtet ist. Der vom Titan-Saphir-Laser 45 ausgehende, in der Wellenlänge veränderte Lichtstrahl 47, weist eine Wellenlänge von ca. 830 nm auf und trifft nachfolgend auf das Mittel zur Unterdrückung 16 der ersten Wellenlänge, das als Farbfilter 49 ausgeführt ist und die Anteile der ersten Wellenlänge nahezu gänzlich herausfiltert, so dass der in der Wellenlänge veränderte Lichtstrahl im Wesentlichen nur aus Licht von 830 nm Wellenlänge besteht.

Fig. 3 zeigt den Teil des Beleuchtungsstrahlenganges eines weiteren Scanmikroskops bis zum Hauptstrahlteiler 23. In diesem Ausführungsbeispiel erzeugt ein Laser 2, der als Nd-YAG-Laser 51 ausgestaltet ist, einen Lichtstrahl 53 einer ersten Wellenlänge von 1064 nm, der auf einen, der als optisches Element 9 zur Wellenlängenveränderung dient, gerichtet ist. Der vom Qptisch-Parametrischen-Oszillator 55 ausgehende, in der Wellenlänge veränderte Lichtstrahl 57, beinhaltet neben dem Licht der gewünschten Signal-Wellenlänge, Licht der Idler-Wellenlänge und Licht der ersten Wellenlänge; er wird mit Hilfe eines Prismas 59, als Mittel zur räumlich spektralen Aufspaltung 60, aufgefächert und trifft anschließend auf eine Blendenanordnung 61, deren Blendenbacken 63, 65 derart positioniert sind, dass das Licht der Idler-Wellenlänge und Licht der ersten Wellenlänge blockiert wird, so dass der die Blendenanordnung 61 passierende Lichtstrahl im Wesentlichen nur Licht der Signalwellenlänge beinhaltet.

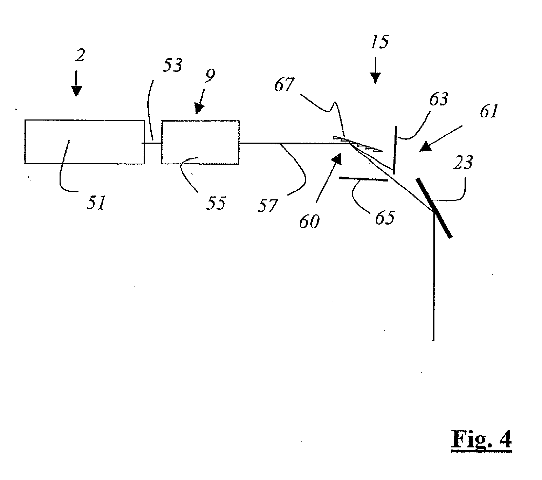

Fig. 4 zeigt den Teil des Beleuchtungsstrahlenganges eines anderen Scanmikroskops bis zum Hauptstrahlteiler 23, der in weiten Teilen dem in Fig. 3 gezeigten Aufbau entspricht. Als Mittel zur räumlich spektralen Aufspaltung 60 ist hier jedoch ein Gitter 67 eingesetzt.

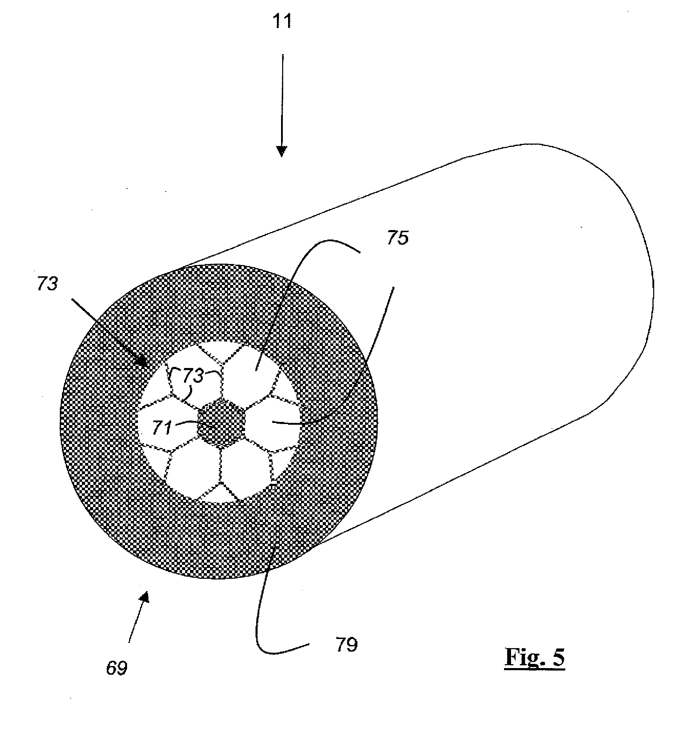

Fig. 5 zeigt eine Ausführungsform der Lichtleitfaser aus Photonic-Band-Gap-Material, die eine besondere wabenförmige Mikrostruktur 69 aufweist. Die gezeigte Wabenstruktur ist für die Generierung von breitbandigem Licht besonders geeignet. Der Durchmesser der Glasinnenkanüle 71 beträgt ca. 1,9 µm. Die innere Kanüle 71 ist von Glasstegen 73 umgeben. Die Glasstege 73 formen wabenförmige Hohlräume 75. Diese mikrooptischen Strukturelemente bilden gemeinsam einen zweiten Bereich 77, der von einem ersten Bereich 79, der als Glasmantel ausgeführt ist, umgeben ist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Scanmikroskop
- 2: Laser
- 3: Titan-Saphir-Laser
- 5: Lichtstrahl
- 7: Einkoppeloptik
- 9: optisches Element
- 11: Lichtleitfaser aus Photonic-Band-Gap-Material
- 13: Auskoppeloptik
- 15: in der Wellenlänge veränderter Lichtstrahl
- 16: Mittel zur Unterdrückung
- 17: dielektrischer Filter
- 19: Optik
- 21: Beleuchtungsblende
- 23: Hauptstrahlteiler
- 25: Scanspiegel
- 27: Scanoptik
- 29: Tubusoptik
- 31: Objektiv
- 33: Probe
- 35: Detektionslicht
- 37: Detektionsblende
- 39: Detektor
- 41: Argon-lonen-Laser
- 43: Lichtstrahl
- 45: Titan-Saphir-Laser
- 47: in der Wellenlänge veränderter Lichtstrahl
- 49: Farbfilter
- 51: Nd-YAG-Laser
- 53: Lichtstrahl einer ersten Wellenlänge
- 55: Optisch-Parametrischen-Oszillator
- 57: in der Wellenlänge veränderter Lichtstrahl
- 59: Prisma
- 60: Mittel zur räumlich spektralen Aufspaltung
- 61: Blendenanordnung
- 63: Blende
- 65: Blende
- 67: Gitter
- 69: Mikrostruktur
- 71: Kanüle
- 73: Steg
- 75: Hohlraum
- 77: zweiter Bereich
- 79: erster Bereich

## Patentansprüche

1. Scanmikroskop (1) mit einem Laser (2), der einen Lichtstrahl einer ersten Wellenlänge (5) emittiert,
mit einem Hauptstrahlteiler (23),
einer Lichtleitfaser (11) zum Leiten von Licht,
einem Scanspiegel (25),
und mit einem Detektor (39), der ein über den Hauptstrahlteiler (23) rückgeführtes Licht detektiert,
**dadurch gekennzeichnet, dass** der Lichtstrahl der ersten Wellenlänge (5) auf ein optisches Element (9) gerichtet ist, das die Wellenlänge des Lichtstrahles zumindest zum Teil verändert,
dass das optische Element (9) als Lichtleitfaser (11) ausgestaltet ist, welche breitbandiges Licht erzeugt,
dass Mittel zur Unterdrückung (16) des Lichtes der ersten Wellenlänge in dem in der Wellenlänge veränderten Lichtstrahl (15) vorgesehen sind,
und dass das Mittel zur Unterdrückung (16) ein Mittel zur räumlich spektralen Aufspaltung (60) und mindestens eine Blende (63, 65) beinhaltet.

2. Scanmikroskop (1) nach Anspruch 1, **dadurch gekennzeichnet, dass** das optische Element (9) aus einer Vielzahl von mikrooptischen Strukturelementen aufgebaut ist, die zumindest zwei unterschiedliche optische Dichten aufweisen.

3. Scanmikroskop (1) nach Anspruch 1 oder 2, **dadurch gekennzeichnet, dass** das optische Element (9) einen ersten Bereich (79) und einen zweiten Bereich (77) beinhaltet, wobei der erste Bereich (79) eine homogene Struktur aufweist und in dem zweiten Bereich (77) eine Mikrostruktur (69) aus mikrooptischen Strukturelementen gebildet ist.

4. Scanmikroskop (1) nach Anspruch 3, **dadurch gekennzeichnet, dass** der erste Bereich (79) den zweiten Bereich (77) umschließt.

5. Scanmikroskop (1) nach einem der Ansprüche 1 bis 4, **dadurch gekennzeichnet, dass** das optische Element (9) aus nebeneinander angeordnetem Glas- oder Kunststoffmaterial und Hohlräumen (75) besteht.

6. Scanmikroskop (1) nach Anspruch 1, **dadurch gekennzeichnet, dass** das optische Element (9) aus Photonic-Band-Gap-Material besteht.

7. Scanmikroskop (1) nach Anspruch 1, **dadurch gekennzeichnet, dass** das Mittel zur Unterdrückung (16) ein Filter ist.

8. Scanmikroskop (1) nach einem der Ansprüche 1 bis 7, **dadurch gekennzeichnet, dass** insbesondere bei der Verwendung von mikrostrukturiertem Material, wie Photonic-Band-Gap-Material, zur Veränderung der Wellenlänge in der Art, dass ein breites Spektrum entsteht, der Filter derart ausgestaltet ist, dass die erste Wellenlänge nicht vollständig unterdrückt wird, sondern innerhalb des in der Wellenlänge veränderten Lichtstrahles dieselbe Leistung aufweist, wie die übrigen Komponenten gleicher spektraler Breite.

9. Scanmikroskop (1) nach einem der vorherigen Ansprüche, **dadurch gekennzeichnet, dass** das Scanmikroskop (1) ein Konfokalmikroskop ist.

10. Scanmikroskop (1) nach Anspruch 1, **dadurch gekennzeichnet, dass** die Lichtleitfaser im Faserkern entlang einem Teilstück eine Verjüngung aufweist.
